# EUROPÄISCHE PATENTSCHRIFT

(11) **EP 3 557 757 B1**
(45) Veröffentlichungstag und Bekanntmachung des Hinweises auf die Patenterteilung: **07.04.2021**
(21) Anmeldenummer: 19160450.3
(22) Anmeldetag: 04.03.2019
(51) Int. Cl.: H02P 8/36

(54) **VERFAHREN ZUM ERKENNEN VON SCHRITTMOTOR-VARIANTEN**
METHOD FOR DETECTING STEPPING MOTORS VARIANTS
PROCÉDÉ DE DÉTECTION DES VARIANTES DE MOTEURS PAS À PAS

(30) Priorität: 03.04.2018 DE 102018107802
(43) Veröffentlichungstag der Anmeldung: 23.10.2019
(73) Patentinhaber: Vaillant GmbH, 42859 Remscheid (DE)
(72) Erfinder: Wölfl, Carsten, 42853 Remscheid (DE)
(74) Vertreter: Popp, Carsten

(56) Entgegenhaltungen:
- EP-A2- 1 215 811
- DE-A1- 4 123 403
- JP-A- S61 269 699

## Beschreibung

Die Erfindung betrifft ein Verfahren zum Erkennen von Schrittmotor-Varianten.

In der Serienproduktion werden häufig Produkte, die mehrere Komponenten umfassen, so gestaltet, dass einzelne Komponenten austauschbar von unterschiedlichen Herstellern stammen können. Dies erhöht die Liefersicherheit für den Fall, dass ein Zulieferer ausfällt. Dabei können die Komponenten auch unterschiedlich sein. Insbesondere bei elektrischen Komponenten wie Schrittmotoren kann sich daraus die Notwendigkeit ergeben, dass die Steuerung, die den Schrittmotor ansteuert, sich an den jeweils verbauten Schrittmotor anpassen muss. Dazu muss der Steuerung die Information vorliegen,

Es ist bekannt, die Steuerung entsprechend manuell zu konfigurieren, d.h. in der Steuerung werden beispielsweise mittels Miniaturschalter, Draht- oder Lötbrücken zu konfigurierende Parameter hinterlegt, die die angeschlossenen Komponenten repräsentieren. Dieses Verfahren ist jedoch anfällig für Fehlbedienungen.

Deshalb wird es bevorzugt, dass die Steuerung selbstständig ermittelt, welche Komponenten angeschlossen sind. Dazu ist es bekannt, Kodierwiderstände in den Komponenten oder in den Steckern der Komponenten vorzusehen, die von der Steuerung identifiziert werden. Dazu sind die Schrittmotoren nachträglich mit nicht handelsüblichen Steckern zu bestücken. Zudem benötigen die Zuleitungen zu den Schrittmotoren zusätzliche Leitungen und die Steuerung zusätzliche Analogeingänge. Dies ist mit zusätzlichen Kosten verbunden.

Es ist daher Aufgabe der Erfindung, eine Vorrichtung und ein Verfahren zum kostengünstigen Erkennen von Schrittmotor-Varianten bereitzustellen.

Diese Aufgabe wird gemäß den Merkmalen des Anspruchs 1 dadurch gelöst, dass verschiedenen Varianten der Schrittmotoren sich durch unterschiedliche Verbindungen der Stränge mit den Stranganschlüssen unterscheiden. Das erfindungsgemäße Verfahren macht sich die Tatsache zunutze, dass Steuereinrichtungen für Schrittmotoren ohnehin über eine Überwachungseinrichtung verfügen, die den Strom in den gemeinsamen Rückleitungen von Strangpaaren misst, wie aus der Patentschrift EP1215811B1 bekannt. Die Schrittmotorvarianten unterscheiden sich durch unterschiedliche Verbindungen der Stranganschlüsse mit den Strängen. Deshalb wird zunächst eine Variante angenommen und der Strom gemessen. In einem Fehlerfall wird zunächst eine andere Variante angenommen. Auch wenn bei anderen Varianten wiederum ein Fehler auftritt, wird ein Drahtbruch oder ein Komponentenausfall diagnostiziert. Das Verfahren wird für alle Kombinationen mit jeweils einem bestromten Strang eines Strangpaares wiederholt.

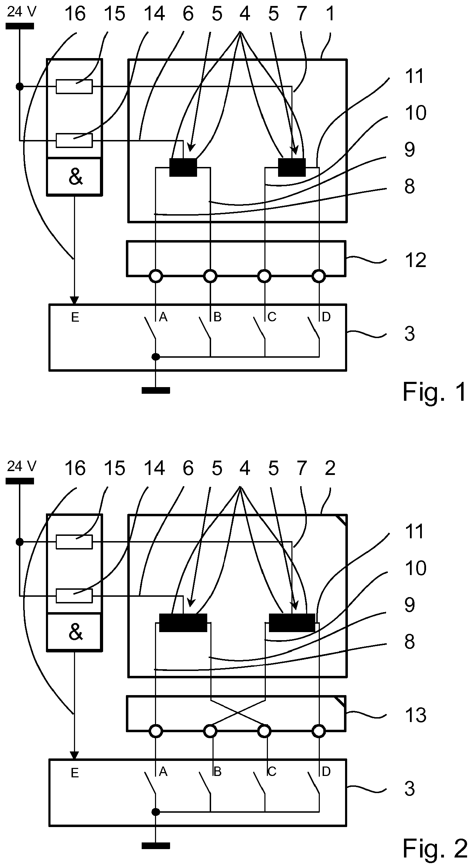

Die Erfindung wird nun anhand der Figuren detailliert erläutert. Die Figuren 1 und 2 stellen elektrische Schaltbilder einer Vorrichtung zum Durchführen des erfindungsgemäßen Verfahrens mit jeweils verschiedenen Varianten eines Schrittmotors 1 bzw. 2 dar.

Der unipolare Schrittmotor 1, 2 umfasst in vier Strängen 4 Elektromagneten, die über die Schalter A, B, C, D einer Steuereinrichtung 3 einzelnen bestrombar sind. Jeweils zwei Stränge 4 sind zu Strangpaaren 5 zusammengefasst und weisen eine gemeinsame Rückleitung 6, 7 auf, über die der Stromkreis geschlossen wird. Im einfachsten Fall ist der Rotor des Schrittmotors als Permanentmagnet mit radial gegenüberliegenden Polen ausgeführt. Im Stator sind die vier Elektromagneten gleichmäßig auf dem Umfang verteilt, wobei die Elektromagneten eines Strangpaares 5 jeweils gegenüber angeordnet sind. Durch periodisches Betätigen der Schalter A, C, B, D kann im Stator ein sich drehendes elektromagnetisches Feld erzeugt werden. Dieses Funktionsprinzip ist prinzipiell für uni polare Schrittmotoren aus dem Stand der Technik bekannt.

Ebenfalls aus dem Stand der Technik ist es bekannt, den Stromfluss in den Rückleitungen 6, 7, die sich zwei Stränge 4 eines Strangpaars 5 teilen, mit Stromsensoren 14, 15 zu messen. Das binäre Signal der Stromsensoren 14, 15 für das Fließen eines Stroms wird logisch UND-verknüpft zu einem Stromsignal 16, welches der Steuereinrichtung 3 zugeführt wird.

Die Varianten 1, 2 der Schrittmotoren können sich beispielsweise durch mechanische oder elektrische Parameter voneinander unterscheiden. Daher muss in der Steuerung 3 die Information vorliegen, welche Variante 1, 2 des Schrittmotors aktuell an die Steuereinrichtung 3 angeschlossen ist, um beispielsweise Beschleunigungsrampen anzupassen. Dazu ist es vorgesehen, die verschiedenen Varianten 1, 2 dadurch zu kodieren, dass in dem jeweiligen zum Schrittmotor 1, 2 gehörenden Steckern 12, 13 die Verbindungen zwischen den Kontakten, die die Verbindung mit den Schaltern A, B, C, die herstellen, und den Stranganschlüssen 8, 9, 10, 11 unterschiedlich ausgeführt sind. Dies kann in der Herstellung leicht realisiert werden, indem beispielsweise die Anschlüsse für die Schalter B und C vertauscht werden.

Nach dem Einschalten oder zu einem anderen Zeitpunkt wird das erfindungsgemäße Verfahren wie folgt ausgeführt. Es wird angenommen, dass der Schrittmotor 1 mit dem Stecker 12 angeschlossen ist. Dazu werden durch die Steuereinrichtung 3 nacheinander in Einzelschritten die Schalter B und D, dann B und C, dann A und C, dann A und D geschlossen und am Eingang E jeweils das Stromsignal 16 erfasst. In allen Schritten ist das Stromsignal 16 am Eingang E logisch 1, sofern Schrittmotor 1 angeschlossen ist und keine Leitungsbrüche oder andere Defekte vorliegen.

Für den Fall, dass der Schrittmotor 2 mit dem Stecker 13 angeschlossen ist, wird bereits im ersten Schritt, wenn Schalter B und D geschlossen sind, am Eingang E ein Stromsignal 16 erfasst, das logisch 0 ist. Dies liegt daran, dass die Schalter B und D mit Strängen 4 verbunden sind, die beide in die zweite Rückleitung 7 münden. Der erste Stromsensor 14 an der ersten Rückleitung 6 erfasst somit keinen Strom. Nun kann entweder der Schrittmotor 2 angeschlossen sein und/oder ein Leitungsbruch oder ein anderer Defekt vorliegen. Daher werden nun in Einzelschritten die Schalter A und B, dann A und D, dann C und B, dann C und D geschlossen und am Eingang E jeweils das Stromsignal 16 erfasst. Ist in allen Schritten ist das Stromsignal 16 am Eingang E logisch 1, liegt fehlerfrei Schrittmotor 2 vor, anderenfalls liegt ein Leitungsbruch oder ein anderer Defekt vor.

### Bezugszeichenliste

- 1: Schrittmotor Variante 1
- 2: Schrittmotor Variante 2
- 3: Steuereinrichtung
- 4: Strang
- 5: Strangpaar
- 6: erste Rückleitung
- 7: zweite Rückleitung
- 8: erster Stranganschluss
- 9: zweiter Stranganschluss
- 10: dritter Stranganschluss
- 11: vierter Stranganschluss
- 12: Stecker Variante 1
- 13: Stecker Variante 2
- 14: erster Stromsensor
- 15: zweiter Stromsensor
- 16: Stromsignal
- A, B, C, D: Schalter
- E: Eingang

## Patentansprüche

1. Verfahren zum Unterscheiden von verschiedenen Varianten (1, 2) von an eine Steuereinrichtung (3) mittels eines Steckers (12, 13) angeschlossenen Unipolar-Schrittmotoren mit mehreren über Stranganschlüsse (8, 9, 10, 11) bestrombaren Strängen (4), wobei jeweils zwei Strangpaare (5) eine gemeinsame Rückleitung (6, 7) haben, wobei Stromsensoren (14, 15) zur Messung des vom Schrittmotor (1, 2) aufgenommen Stroms an den gemeinsamen Rückleitungen (6, 7) vorgesehen sind, und wobei sich die verschiedenen Varianten der Schrittmotoren (1, 2) durch die Zuordnung der Stranganschlüsse zu den Kontakten im Stecker (12, 13) unterscheiden, **gekennzeichnet durch** die Schritte
a) Bestromen der Stranganschlüsse in der Weise, dass bei einer ersten angenommenen Variante jeweils einer der zu Strangpaaren (5) verbundenen Stränge (4) bestromt wird,
b) Feststellen, ob in allen Rückleitungen (6, 7) Strom fließt,
c) Falls nicht in allen Rückleitungen (6, 7) Strom fließt, mit einer weiteren angenommenen Variante (1, 2) bei Schritt a) neu starten, oder aber ein Fehlersignal für eine Störung ausgeben, falls bereits alle (1, 2) Varianten angenommen wurden,
d) Wiederholen der Schritte a) bis c) für alle weiteren möglichen Kombinationen der bestrombaren Stränge (4) der Strangpaare (5),
e) Speichern der angenommenen Variante des angeschlossenen Schrittmotors.

## Claims

1. Method for distinguishing between different variants (1, 2) of unipolar-stepping motors connected to a control device (3) by means of a connector (12, 13) with a plurality of strings (4) energisable via string contacts (8, 9, 10, 11), wherein two pairs of strings (5) respectively have a common return line (6, 7), wherein current sensors (14, 15) for measuring the current received by the stepping motor (1, 2) are provided on the common return lines (6, 7), and wherein the different variants of stepping motors (1, 2) differ in the allocation of the string contacts to the contacts in the connector (12, 13),
**characterised by** the steps
a) energising the string contacts such that in a first accepted variant one of the strings (4) connected to pairs of strings (5) is energised respectively,
b) detecting whether current flows in all return lines (6, 7),
c) if current does not flow in all return lines (6, 7), restarting at step a) with another accepted variant (1, 2), or outputting an error signal for a fault, if all (1, 2) variants have already been accepted,
d) repeating steps a) to c) for all further possible combinations of the energisable strings (4) of the pair of strings (5),
e) saving the accepted variant of the connected stepping motor.

## Revendications

1. Procédé pour la différenciation de diverses variantes (1, 2) de moteurs pas-à-pas unipolaires raccordés à un dispositif de commande (3) au moyen d'une fiche (12, 13) avec plusieurs torons (4) pouvant être alimentés en courant via des raccords de toron (8, 9, 10, 11), dans lequel respectivement deux paires de torons (5) ont une ligne de retour commune (6, 7), dans lequel des capteurs de courant (14, 15) pour la mesure du courant absorbé par le moteur pas-à-pas (1, 2) sont prévus au niveau des lignes de retour communes (6, 7), et dans lequel les diverses variantes des moteurs pas-à-pas (1, 2) se différencient par le biais de l'association des raccords de toron aux contacts dans la fiche (12, 13),
**caractérisé par** les étapes
a) d'alimentation en courant des raccords de toron de façon à ce que dans le cas d'une première variante acceptée respectivement un des torons (4) reliés à la paire de torons (5) est alimenté en courant,
b) de constatation du fait que du courant circule dans toutes les lignes de retour (6, 7),
c) dans le cas où du courant ne circule pas dans toutes les lignes de retour (6, 7), de recommencement à l'étape a) avec une autre variante acceptée (1, 2), ou d'émission d'un signal d'erreur pour une perturbation, dans le cas où toutes (1, 2) les variantes ont déjà été acceptées,
d) de répétition des étapes a) à c) pour toutes les autres combinaisons possibles des torons (4) de la paire de torons (5) pouvant être alimentés,
e) de mise en mémoire de la variante acceptée du moteur pas-à-pas raccordé.
